Europäisches Patentamt

**European Patent Office**

Office européen des brevets

(19)

(11) Publication number: **0 111 424**
A2

(12)                    **EUROPEAN PATENT APPLICATION**

(21) Application number: **83307454.5**

(22) Date of filing: **07.12.83**

(51) Int. Cl.³: **B 60 J 7/10**

(30) Priority: **08.12.82 GB 8234975**

(43) Date of publication of application:
**20.06.84 Bulletin 84/25**

(84) Designated Contracting States:
**AT BE DE FR IT NL SE**

(71) Applicant: **Idex (Jersey) Limited**
**10 Royal Square**
**St-Helier Jersey Channel Islands(GB)**

(72) Inventor: **Bartmann, Nicolas**
**32 Risborough Road Stoke Manderville**
**Aylesbury Buckinghamshire(GB)**

(72) Inventor: **Frampton, Jeffery Alan**
**107, Route du Nant d'Avril**
**1217 Meyrin Geneva(CH)**

(74) Representative: **Clifford, Frederick Alan et al,**
**MARKS & CLERK 57/60 Lincoln's Inn Fields**
**London WC2A 3LS(GB)**

(54) **Handle.**

(57) An opening handle for a front-pivoted sunroof panel, comprises a shell 11 with transverse forward pivot axis 14 for attachment to the panel and transverse rearward axis 19 carrying a ratchet drum 29 with parallel arms 27 themselves defining a pivot axis 28 at their outer ends for attachment to the vehicle roof. A flexible panel plate 12 lies inside the shell 11 with a rear edge 25 lying as a detent in the ratchet. Well 24 defines a protrusion extending through the shell at 16. When the shell is pulled pivots 28,19 and 14 are all operative to open the panel; the ratchet 29 permits maintained stepwise opening. When the protrusion (well 24) is pressed the detent edge 25 is moved away from the ratchet, allowing rapid closure of the panel.

FIG.2b.

FIG.2c.

FIG.2a.

EP 0 111 424 A2

Title: "Handle"

This invention relates to a handle for opening a hinged flap member, more especially a horizontal openable flap mounted as the sunroof of a motor vehicle.

Usually such sunroof flaps are made of toughened glass, to allow extra light into the vehicle, and are openable to increase ventilation at a rearward edge. They are hinged at the front edge, and a novel example of a demountable hinged front edge is shown in our copending Application 82/.34974...... of even date.

A hinged sunroof operating handle, to be acceptable to customers, must be subject to certain design constraints. It must be easily operable, without inspection by a driver whose attention is on the traffic. It should generally be openable, and capable of being kept open, in a succession of definite stages. By virtue of legal requirements it should not unduly obstruct the overhead space, in case an entering driver or passenger should bump against it, and it should be closable rapidly with a simple action; moreover, any impact from the rear e.g. passenger impact in an accident, should tend to open the flap.

In one aspect the invention provides:

a handle permitting the stepwise maintained opening of a flap, such as a sunroof panel for an automobile, pivoted at or towards a forward edge thereof, comprising:

(a) an external shell member adapted for pivotal connection at a forward edge thereof to the rearward edge of the panel, and having means defining a transverse pivot axis at or towards a rear edge thereof, (b) an attached or integral internal pawl plate, a transverse edge of which at or near the rearward portion thereof acts as a releasable detent means with (c) a ratchet member journalled around the shell rearward pivot axis and having at least one arm extending away from the axis adapted to pivot at the other end about a further pivot axis connected to the vehicle roof or to a component fixed in relation thereto.

In another aspect the invention provides a handle permitting the stepwise maintained opening of a flap, such as a sunroof panel for an automobile, pivoted at or towards a forward edge thereof, comprising:

(a) an external shell member adapted for pivotal connection at a forward edge thereof to the rearward edge of the panel, having an aperture in an undersurface thereof and having means defining a transverse pivot axis at or towards a rear edge thereof, (b) an internal pawl plate, attached or integral at a forward edge thereof within a forward portion of the external shell, for resilient relative movement, having (i)

3.

a downwardly extending protrusion located within the shell aperture and (ii) a transverse edge at or near the rearward portion thereof as a detent means with

(c) a transversely extending ratchet drum, journalled around the shell rearward pivot axis and having parallel arms, extending away from the said axis, adapted to pivot at their other ends about a further transverse pivot axis connected to the vehicle roof or to a component fixed in relation thereto.

The handle can be formed of moulded synthetic polymeric material, which can impart the necessary flexibility to the shell/pawl plate interconnection. The pawl plate itself may alternatively be metal.

The pawl plate can terminate in a detent edge; in such a case the shell may be rounded to overlie such an edge. Alternatively the pawl plate itself may overlie the ratchet drum and a projecting transverse detent be provided to extend from its lower surface.

The assembly of the handle to the sunroof panel and vehicle roof (or frame surround) is also an aspect of the invention.

The invention will be further described with

4.

reference to the accompanying drawings, in which:

Figure 1 shows a central longitudinal section
through the assembled handle,

Figure 1a shows a variant of part of Figure 1, and

Figures 2a, 2b and 2c shows in perspective the
three main component parts, as dismantled, of a
handle modified in minor respects.

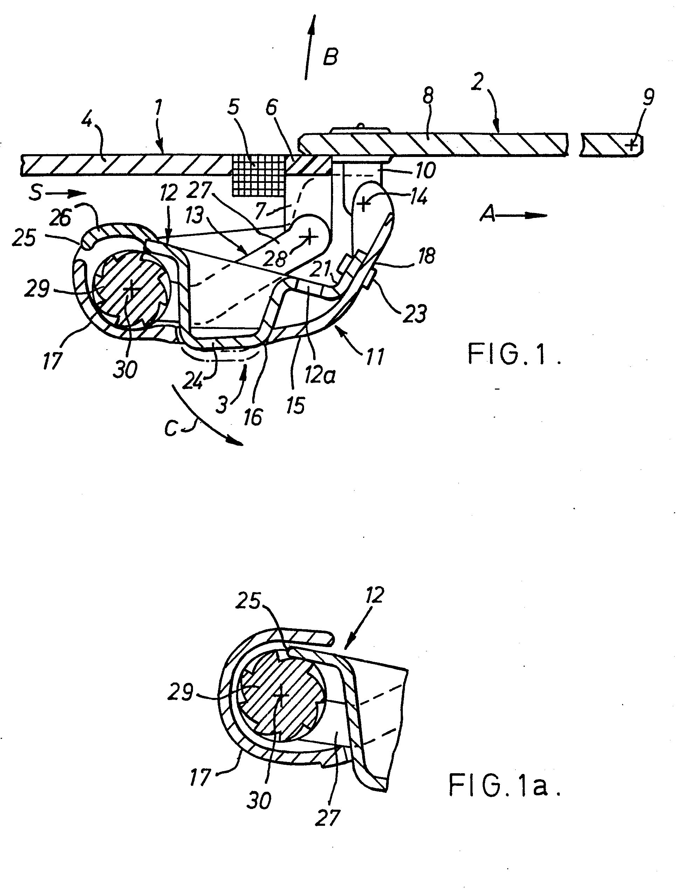

Figure 1 shows a vehicle roof surround structure
1, a sunroof structure 2, and a handle 3.

The vehicle roof surround structure 1 possesses
a roof panel 4, sunroof aperture surround 5, surrounding
elastomeric seal 6 and downwardly extending handle-fixing
pivot lugs as shown at 7. These features are only shown
diagrammatically since they are well known per se, can
vary in detail, and do not form part of the handle of
the present invention.

The sunroof structure 2 is basically a toughened
glass panel 8, pivoted at 9, at or near a forward edge,
and provided with downwardly extending lugs as at 10
passing through the glass to give pivot points between
the sunroof-structure and the handle. Alternatively,
a single fixing bar can be used. Again, the exact nature

5.

of the sunroof, and its forward pivot structure, can vary, although the structure shown in our copending Application 82./34974is of particular value. Preferably lugs 7 and 10 abut positively when the sunroof panel is closed.

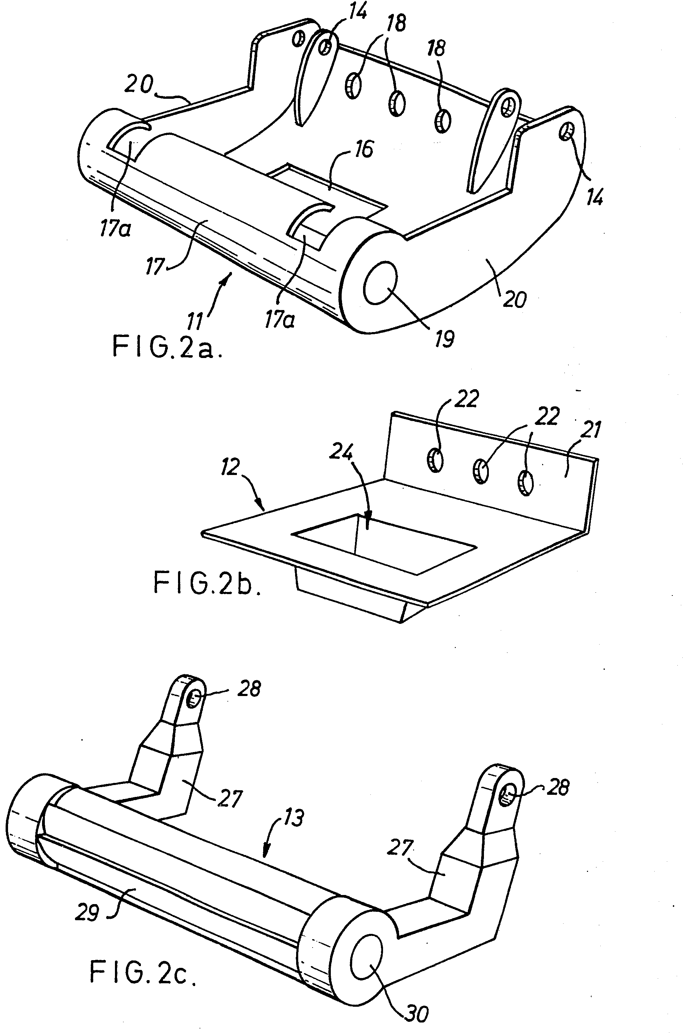

The handle 3 is in three parts: an outer shell 11 (Figure 2a), an inner pawl plate 12 (Figure 2b) and an inner ratchet structure 13 (Figure 2c).

The outer shell 11 is pivoted at 14, one pivot on each side, to lugs 10. It has a smooth base surface 15 with generally central aperture 16 and a rounded rear edge 17 with two notches 17a formed therein. (Reference to front and rear edges is herein defined as being relative to vehicle movement, shown by arrow A). Fixing holes 18 are located in the front edge and pivot holes as at 19 are provided in alignment at each side wall 20.

The pawl plate 12 has an upturned front edge 21 with fixing holes 22 therein, through which extends rivets or the like 23 which also pass through holes 18 in shell 11, so as to connect the two parts. In an alternative form, the plate is fastened to the base of

6.

of the shell. A well portion 24 optionally with a central longitudinal rib extends below the central part of the pawl plate 12, and thus through aperture 16 in the shell 11 when assembled. Towards rear edge 25, and beneath the plate, Figure 1 shows a ledge 26 acting as a detent. (In the alternative shown in Figures 1a and 2b, the rear edge 25 of the plate itself acts as a detent, and the curved rear shell edge 17 overlies this plate rear edge 25).

The ratchet structure 13 (Figure 2c) has side arms 27 pivoted at 28 to lugs 7. Connecting these arms is an elongate ratchet drum 29, to cooperate either with detent edge 26 (Figure 1) or plate edge 25 (Figure 2b) in the alternative versions shown. This ratchet drum 29 is journalled at 30 on a shaft passing through pivot holes 19.

The handle components may be made of moulded synthetic polymeric material. The pawl plate 12, at least, should be flexibly mounted in relation to the shell 11. The use of synthetic polymer facilitates this, and relative flexibility can be adjusted by provision of holes 12a where shown in Figure 1.

To raise the sunroof structure 2, so that its

6.

7.

rear edge moves in the direction of arrow B, around front pivot 9, the driver or passenger reaches up and back, locates his fingers in space S, and pulls the handle 3 downwards. As he pulls, the detent 26 is pulled into engagement with the ratchet drum 29 (Figure 1). In an alternative, flexible rounded edge 17 is deformed and pushes edge 25 into such engagement (see Figure 1a). In either case the pawl plate 12 moves down, e.g. so that the well is in a position shown in dotted lines.

The handle 3 pivots about pivot point 28. However, because the ratchet is held against relative clockwise movement by detent 26 (or edge 25) the shell 11 is displaced. It is constrained at pivots 14 by the only possible sunroof movement, and thus moves upwards, adjusting its angle at 14 relative to the sunroof, and eventually rotating in relation to the ratchet drum 29 until the ratchet clicks, relatively anticlockwise. Thus the ratchet drum moves in direction of arrow C.

The arms 27 of the ratchet structure 13 will therefore progressively take up a different angle with the shell 11 and associated pawl plate 12, and each tooth of the ratchet represents a different such angle and

8.

thus a different, stepped, extent of maintained opening.
Slots 17a permit particularly wide opening.

To close the sunroof, the driver or passenger
merely has to reach, squeeze the shell to press on the
well portions and move the shell towards the rear.
Pressing well portion 24 inwards disengage the ratchet
and detent 26 (or 25) so that the flap can be rapidly
closed.

9.

CLAIMS:

1.    A handle permitting stepwise maintained opening of a vehicle roof panel pivoted substantially at a forward edge thereof comprising:

    (a)    an external shell member;

    (b)    a forward pivot adaptation at a forward region of the said shell member whereby it may be pivotally connected to a rearward edge of said panel;

    (c)    a rearward pivot axis at a rearward region of said shell;

    (d)    an internal panel plate;

    (e)    a transverse rearward edge of said name plate;

    (f)    a ratchet member journalled about said rearward pivot axis, said panel plate transverse rearward edge acting as a detent for said ratchet member;

    (g)    at least one arm extending away from said rearward pivot axis, and

    (h)    a further pivot axis at the remote end of said arm adapted for pivotal connection at said vehicle roof.

2.    A handle permitting stepwise maintained opening of a vehicle roof panel pivoted substantially at a forward edge thereof, comprising:

    (a)    an external shell member adapted to define an aperture in an undersurface thereof;

10.

(b)     a forward pivot adaptation at a forward region of the shell member whereby it may be pivotally connected to a rearward edge of said panel;

(c)     a rearward pivot axis at a rearw rd region of said shell;

(d)     an internal panel plate;

(e)     a forward edge region of said panel plate permitting resilient relative movement of the said panel plate and shell;

(f)     a downwardly extending protrusion located in said shell aperture;

(g)     a transverse rearward edge of said panel plate;

(h)     a transverse ratchet drum journalled about said rearward pivot axis, said panel plate transverse rearward edge acting as a detent for said ratchet drum;

(i)     a pair of parallel arms extending away from the said rearward pivot axis, and

(j)     a further pivot axis passing through the remote ends of each arm for pivotal connection of the arms at said vehicle roof.

3.     A handle as claimed in claim 1 or 2 formed as moulded synthetic polymeric material components.

4.     A handle as claimed in claim 1 or 2 , in which the panel plate is metal.

11.

5. A handle as claimed in claim 1 or 2 in which the panel plate terminates in a detent edge.

6. A handle as claimed in claim 1 or 2 in which the panel plate overlies the ratchet member and a projecting transverse detent is provided to extend from its lower surface.

0111424

FIG.1.

FIG.1a.

0111424

FIG.2a.

FIG.2b.

FIG.2c.